# EUROPÄISCHE PATENTSCHRIFT

(11) **EP 0 425 942 B1**
(45) Veröffentlichungstag und Bekanntmachung des Hinweises auf die Patenterteilung: **24.11.1993**
(21) Anmeldenummer: 90120142.6
(22) Anmeldetag: 20.10.1990
(51) Int. Cl.: B29C 47/88, B29C 47/90

(54) **Kalibrier- und Kühlvorrichtung für extrudierte Rohre aus Kunststoff**
Calibration and cooling apparatus for extruded plastic tubes
Dispositif de calibrage et de refroidissement pour un tube extrudé en matière plastique

(30) Priorität: 31.10.1989 DE 3936222
(43) Veröffentlichungstag der Anmeldung: 08.05.1991
(73) Patentinhaber: INOEX GmbH, D-32547 Bad Oeynhausen (DE)
(72) Erfinder: Neumann, Ulrich, W-4970 Bad Oeynhausen 1 (DE); Wölfl, Volkmar Rudolf, W-4973 Vlotho-Valdorf (DE)
(74) Vertreter: Cohausz & Florack Patentanwälte

(56) Entgegenhaltungen:
- EP-A- 0 143 215
- DE-A- 2 412 818
- DE-A- 2 616 197
- DE-U- 8 606 212
- FR-A- 2 386 408
- GB-A- 2 143 770
- LU-A- 33 304
- US-A- 4 090 828

## Beschreibung

Die Erfindung bezieht sich auf eine Kalibrier- und Kühlvorrichtung für extrudierte Rohre aus Kunststoff, bestehend aus einer unter Unterdruck stehenden Durchlaufkammer mit einem den Eingang bildenden Kalibrier- und Dichtring und einem den Ausgang bildenden Dichtring sowie mit in der Durchlaufkammer angeordneten Sprühdüsen, die zum Aufsprühen einer Kühlflüssigkeit auf das durchlaufende extrudierte Rohr gerichtet sind.

Beim Anfahren eines Extruders bereitet das Ein- und Durchführen des unförmigen Rohranfangs durch die der Kühlung des nachformbaren unförmigen Rohranfangs dienende Durchlaufkühlkammer Schwierigkeiten. Um den unförmigen Rohranfang in die Durchlaufkammer ein- und aus ihr herausführen zu können, ist die Durchlaufkammer mit mehreren, durch Deckel verschließbare Öffnungen versehen, durch die die Bedienperson mit der Hand durchgreifen und den Rohranfang führen kann. Diese Art des Anfahrens des Extruders erfordert nicht nur wegen der durch Deckel verschließbaren Öffnungen einen verhältnismäßig großen vorrichtungstechnischen Aufwand, sondern auch und vor allem einen großen personellen Aufwand. Hinzu kommt, daß bei diesem Anfahren nicht verhindert werden kann, daß das einzuführende Rohr an den Sprühdüsen scheuert und dadurch diese beschädigt oder verstopft oder sogar abreißt. Schließlich ist das Einführen und Durchführen des unförmigen Rohranfangs problematisch, weil das Rohr am Eingang und Ausgang der Kammer durch die Dichtringe gezogen werden muß, wo es zu hohen mechanischen Belastungen kommen kann, die sogar zum Abriß des Rohres beim Anfahren führen können.

Der Erfindung liegt die Aufgabe zugrunde, eine Kalibrier- und Kühlvorrichtung zu schaffen, mit der mit geringem vorrichtungstechnischen und personellen Aufwand und ohne Gefahr für die Teile der Kühlvorrichtung der Anfang eines extrudierten Rohres in und durch die Kühlvorrichtung gefördert wird.

Diese Aufgabe wird erfindungsgemäß bei einer Kalibrier- und Kühlvorrichtung der eingangs genannten Art dadurch gelöst, daß in der Durchlaufkühlkammer ein sich im wesentlichen von deren Eingang bis zu deren Ausgang erstreckendes Führungselement für den in die Durchlaufkühlkammer einzuführenden Anfang des Rohres vorgesehen ist, die geringfügig außerhalb der Betriebssollage des Rohres angeordnet ist, daß der Kalibrier- und Dichtring am Eingang und der Dichtring am Ausgang derart weit auffahrbar sind, daß sie außerhalb der Betriebssollage des Rohres liegen und daß auf der dem zu führenden Rohr abgewandten Rückseite des Führungselementes die Sprühdüsen vorgesehen sind, für die in dem Führungselement Durchlässe für die Kühlflüssigkeit vorgesehen sind.

Bei der erfindungsgemäßen Kühlvorrichtung wird nach Auffahren der Kalibrier- und Dichtringe der unförmige Rohranfang praktisch belastungsfrei von dem Führungselement durch die Durchlaufkühlkammer zum Ausgang geführt, wobei gewährleistet ist, daß er nicht mit den Sprühdüsen in Berührung kommt. Zu einem Abreißen des Rohranfangs kann es nicht kommen, weil wegen der aufgefahrenen Kalibrier- und Dichtringe am Eingang der Kammer und am Ausgang der Kammer der Anfang nicht belastet wird. Die geringfügig exzentrisch aus der eigentlichen Führungsbahn versetzte Führung ist beim Anfahren unkritisch; während des Betriebes ist jedoch aufgrund dieser Versetzung gewährleistet, daß das Rohr nicht an der Führung schleift. Dies kommt dem einfachen Aufbau zugute, denn es erspart eine Verstellbarkeit der Führung zwischen dem Anfahrbetrieb und dem eigentlichen Betrieb.

Nach einer ersten Ausgestaltung der Erfindung besteht das Führungselement aus mindestens einem unteren rinnenartigen Blech, das im unteren Bereich Abflußöffnungen für Kühlflüssigkeit aufweist, die vom Rohr nach Aufsprühen abtropft.

Eine konstruktiv vorteilhafte Ausgestaltung der Erfindung besteht darin, daß das Führungselement die Spritzdüsen und gegebenenfalls zu ihnen führende Versorgungsleitungen trägt.

Als weitere Ausgestaltung der Erfindung ist vorgesehen, daß der Kalibrier- und Dichtring am Eingang und der Dichtring am Ausgang jeweils aus aufklappbaren Teilringen besteht. Die Teilringe greifen vorzugsweise in kulissenartige Führungen an den Stirnseiten der Durchlaufkammer ein.

Im folgenden wird die Erfindung anhand einer ein Ausführungsbeispiel darstellenden Zeichnung näher erläutert.

Im einzelnen zeigen:
- Figur 1: eine Kalibrier- und Kühlvorrichtung für extrudierte Rohre in eingangsseitiger Stirnansicht,
- Figur 2: die Kalibrier- und Kühlvorrichtung der Figur 1 im Bereich des Eingangs im Axialschnitt **und**
- Figur 3: die Kalibrier- und Kühlvorrichtung der Figur 1.

Das Ausführungsbeispiel der erfindungsgemäßen Kalibrier- und Kühlvorrichtung weist eine rohrförmige unter Unterdruck stehende Durchlaufkühlkammer 1 auf, die eingangs- und ausgangsseitig an Ringflanschen 6 gehaltene Kalibrier- und Dichtringe 7 aufweist. Ein vom Extruder kommendes Rohr 8 gelangt über den Eingang in die Kammer 1. Während des Durchlaufs durch die Kammer 1 wird es allseitig von Sprühdüsen 3 mit einer Kühlflüssigkeit, zum Beispiel Wasser, besprüht. Aufgrund des in der Kammer 1 herrschenden Unterdruckes kann das zunächst noch verformbare Rohr 8 nicht zusammenfallen.

Der Kalibrier- und Dichtring 7 am Eingang der Durchlaufkühlkammer besteht aus zwei Teilringen 7a,7b, die mit Tragplatten 7c,7d jeweils am Flansch 6 verschwenkbar gelagert und von Stellzylindern 9a,9b aufklappbar sind. Im geschlossenen Zustand greifen die Tragplatten 7c,7d kulissenartig hinter einen Führungskragen 6a des Flansches 6. Im Bereich des Kragens 6a ist eine Ringdichtung 6b vorgesehen, die bewirkt, daß die beiden Tragplatten 7c,7d mit dem Kalibrier- und Dichtring 7 gegenüber dem Flansch 6 abgedichtet sind.

Der in der Zeichnung nicht dargestellte Dichtring am Ausgang der Durchlaufkühlkammer ist entsprechend ausgestaltet.

In der Durchlaufkühlkammer 1 erstrecken sich etwa vom Eingang bis zum Ausgang als Führungselement rinnenartige Leitbleche 2a,2b, die mit Öffnungen 4a,4b mit dahinter angeordneten Sprühdüsen 3a,3b für eine auf das Rohr 8 aufzusprühende Flüssigkeit und Öffnungen 5a,5b zum Abfließen für aufgefangene Sprühflüssigkeit versehen sind. Die Führungen 2a,2b tragen auf ihrer dem Rohr 8 abgewandten Rückseite Versorgungszuleitungen 11a,11b für die den Sprühdüsen 3a,3b zuzuführende Sprühflüssigkeit.

Das Einführen und Durchführen des Anfangs eines extrudierten Rohres 8 erfolgt bei der Kalibrier- und Kühlvorrichtung auf folgende Art und Weise:

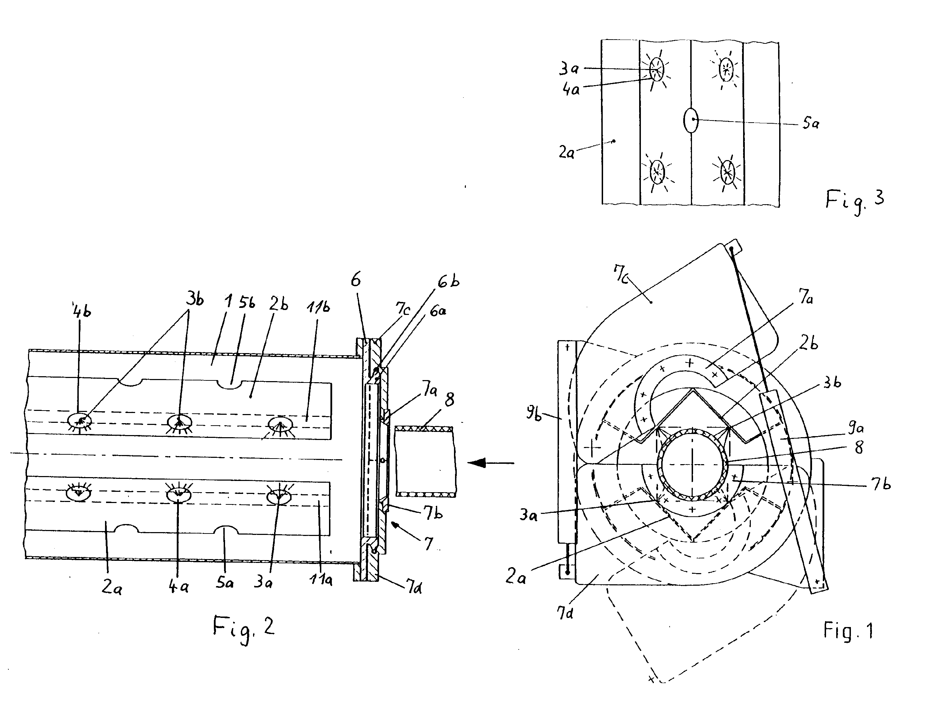

Zunächst werden sowohl am Eingang als auch am Ausgang der Durchlaufkühlkammer 1 die Teilringe 7a,7b mit den Stellzylindern 9a,9b aufgefangen, wie in Figur 1 in ausgezeichneter Lage für den oberen Teilring 7a und in gestrichelter Lage für den unteren Teilring 7b dargestellt ist. In der aufgefahrenen Lage geben die beiden Teilringe 7a,7b für die Zentrierung und Abdichtung den Eingang soweit frei, daß sie außerhalb der Flucht der Führungselemente 2a, 2b liegen. Der Anfang des Rohres 8 kann also ohne Behinderung in die Durchlaufkühlkammer 1 eingeführt werden. Er gleitet dabei über die Führung 2a. Da die Düsen 3a hinter den Öffnungen 4 liegen, können sie nicht beschädigt oder verschmutzt werden. Ist das ganze Rohr 8 eingezogen, dann werden die Teilringe 7a,7b am Eingang und am Ausgang wieder geschlossen. Das eingefahrene Rohr 8 hebt sich dann von der Führung 2a ab und kann dann allseitig von den Sprühdüsen 3a,3b gleichmäßig gekühlt werden.

## Patentansprüche

1. Kalibrier- und Kühlvorrichtung für extrudierte Rohre (8) aus Kunststoff, bestehend aus einer unter Unterdruck stehenden Durchlaufkühlkammer (1) mit einem den Eingang bildenden Kalibrier- und Dichtring (7) und einem den Ausgang bildenden Dichtring sowie mit in der Durchlaufkühlkammer (1) angeordneten Sprühdüsen (3), die zum Aufsprühen einer Kühlflüssigkeit auf das durchlaufende, extrudierte Rohr (8) gerichtet sind,
**dadurch gekennzeichnet**, daß in der Durchlaufkühlkammer (1) ein sich im wesentlichen von deren Eingang bis zu deren Ausgang erstreckendes Führungselement (2a,2b) für den in die Durchlaufkühlkammer (1) einzuführenden Anfang des extrudierten Rohres (8) vorgesehen ist, das geringfügig außerhalb der Betriebssollage des Rohres (8) angeordnet ist, daß der Kalibrier- und Dichtring (7) am Eingang und der Dichtring am Ausgang derart weit auffahrbar sind, daß sie außerhalb der Betriebssollage des extrudierten Rohres (8) liegen, und daß auf der dem zu führenden Rohr (8) abgewandten Rückseite des Führungselementes (2a,2b) die Sprühdüsen (3) vorgesehen sind, für die in dem Führungselement (2a,2b) Durchlässe (4) für die Kühlflüssigkeit vorgesehen sind.

2. Kalibrier- und Kühlvorrichtung nach Anspruch 1,
**dadurch gekennzeichnet**, daß der Kalibrier- und Dichtring (7) am Eingang und der Dichtring am Ausgang jeweils aus aufklappbaren Teilringen (7a,7b) besteht.

3. Kalibrier- und Kühlvorrichtung nach Anspruch 2,
**dadurch gekennzeichnet**, daß die Teilringe (7a,7b) in kulissenartigen Führungen (6a) an der Stirnseite der Durchlaufkühlkammer (1) eingreifen.

4. Kalibrier- und Kühlvorrichtung nach einem der Ansprüche 1 bis 3,
**dadurch gekennzeichnet**, daß das Führungselement (2a,2b) aus mindestens einem unteren rinnenartigen Blech (2a) besteht, das im unteren Bereich Abflußöffnungen (5a) für die Kühlflüssigkeit aufweist.

5. Kalibrier- und Kühlvorrichtung nach einem der Ansprüche 1 bis 4,
**dadurch gekennzeichnet**, daß das Führungselement (2a,2b) die Sprühdüsen (3a,3b) und gegebenenfalls zu ihnen führende Versorgungsleitungen (11a, 11b) trägt.

## Claims

1. A calibration and cooling device for extruded plastics tubes (8), comprising: a continuous cooling chamber (1) at negative pressure and having a calibration and sealing ring (7) forming the inlet; a sealing ring forming the outlet; and spraying nozzles (3) which are disposed in the continuous cooling chamber (1) and are directed for spraying a cooling liquid on to the extruded tube (8) passing through, characterized in that the continuous cooling chamber (1) has a guide element (2a, 2b), which extends substantially from the inlet of said chamber to its outlet from the start of the extruded tube (8) to be introduced into the continuous cooling chamber (1) and which is disposed slightly outside the required operational position of the tube (8); the calibration and sealing ring (7) at the inlet and the sealing ring at the outlet can be moved up until they lie outside the required operational position of the extruded tube (8); and the spraying nozzles (3), for which the guide element (2a, 2b) is formed with passages (4) for the cooling liquid, are provided on that rear side of the guide element (2a, 2b) which is remote from the tube (8) to be guided.

2. A calibration and cooling device according to claim 1, characterized in that the calibration and sealing ring (7) at the inlet and the sealing ring at the outlet each consist of upwardly hingeable part rings (7a, 7b).

3. A calibration and cooling device according to claim 2, characterized in that the part rings (7a, 7b) engage in slide-like guides (6a) in the end face of the continuous cooling chamber (1).

4. A calibration and cooling device according to one of claims 1 to 3, characterized in that the guide element (2a, 2b) consists of at least one lower channel-like metal plate (2a) the lower zone of which is formed with flow-off openings (5a) for the cooling liquid.

5. A calibration and cooling device according to one of claims 1 to 4, characterized in that the guide element (2a, 2b) bears the spraying nozzles (3a, 3b) and possibly supply lines (11a, 11b) extending thereto.

## Revendications

1. Dispositif de calibrage et de refroidissement pour tubes extrudés (8) en matière plastique, constitué d'une chambre de refroidissement de passage (1) sous dépression, comportant une bague de calibrage et d'étanchéité, (7) formant l'entrée et une bague d'étanchéité formant la sortie ainsi que des buses de pulvérisation (3) agencées dans la chambre de refroidissement de passage (1), lesquelles buses sont dirigées sur le tube extrudé continu (8) pour pulvériser un liquide de refroidissement, caractérisé en ce qu'il est prévu dans la chambre de refroidissement de passage (1) un élément de guidage (2a, 2b) s'étendant sensiblement de son entrée à sa sortie pour la partie avant du tube extrudé (8) pénétrant dans la chambre de refroidissement de passage (1), élément de guidage qui est agencé à très peu de distance à l'extérieur de la position théorique de fonctionnement du tube (8), la bague de calibrage et d'étanchéité (7) à l'entrée et la bague d'étanchéité à la sortie pouvant être largement avancées en sorte qu'elles se trouvent à l'extérieur de la position théorique de fonctionnement du tube extrudé (8), et sur la partie arrière de l'élément de guidage (2a, 2b) opposée au tube à guider (8) sont prévues les buses de pulvérisation (3) pour lesquelles sont agencés dans l'élément de guidage (2a, 2b) des passages (4) pour le liquide de refroidissement.

2. Dispositif de calibrage et de refroidissement selon la revendication 1, caractérisé en ce que la bague de calibrage et d'étanchéité (7) à l'entrée et la bague de calibrage à la sortie sont respectivement const- ituées de bagues partielles (7a, 7b) relevables.

3. Dispositif de calibrage et de refroidissement selon la revendication 2, caractérisé en ce que les bagues partielles (7a, 7b) s'enclenchent dans des glissières du type à coulisse (6a) sur la partie avant de la chambre de refroidissement de passage (1).

4. Dispositif de calibrage et de refroidissement selon l'une quelconque des revendications 1 à 3, caractérisé en ce que l'élément de guidage (2a, 2b) est constitué d'au moins une tôle inférieure en forme de rigole (2a) qui présente, dans la zone inférieure, des ouvertures de décharge (5a) pour le liquide de refroidissement.

5. Dispositif de calibrage et de refroidissement selon l'une quelconque des revendications 1 à 4, caractérisé en ce que l'élément de guidage (2a, 2b) porte les buses de pulvérisation (3a, 3b) et éventuellement des conduites d'alimentation (11a, 11b) menant à ces buses.
